# EUROPÄISCHE PATENTANMELDUNG

(11) **EP 4 542 521 A2**
(43) Veröffentlichungstag der Anmeldung: **23.04.2025**
(21) Anmeldenummer: 25155923.3
(22) Anmeldetag: 30.05.2022
(51) Int. Cl.: G08C 19/08

(54) **VERFAHREN UND SENSORBUS-SYSTEM**

(30) Priorität: 23.06.2021 DE 102021206489
(62) Teilanmeldung aus: 22734136.9
(71) Anmelder: Robert Bosch GmbH, 70442 Stuttgart (DE)
(72) Erfinder: Klotz, Albrecht, 71229 Leonberg (DE); Reiner, Torsten, 72631 Aichtal (DE); Nagy, Balint, 2220 Vecsés (HU); Schumann, Michael, 70597 Stuttgart (DE); Schmid, Dirk, 75397 Simmozheim (DE)

(57) **Zusammenfassung**

Es werden ein Verfahren zur Datenübertragung in einem Sensorbus-System (1) sowie ein Sensorbus-System (1) vorgeschlagen. Das Sensorbus-System (1) umfasst ein elektronisches Steuergerät (2), mehrere Sensoren (3) und eine verdrillte Zweidrahtleitung (4) zwischen dem elektronischen Steuergerät (2) und den Sensoren (3), wobei das elektronische Steuergerät (2) eingerichtet ist, die Sensoren (3) über die verdrillte Zweidrahtleitung (4) mit elektrischer Energie zu versorgen und die Sensoren (3) eingerichtet sind, empfangene Informationen I/Qmoduliert über die verdrillte Zweidrahtleitung (4) an das elektronische Steuergerät (2) zu senden.

## Beschreibung

### Stand der Technik

Die vorliegende Erfindung betrifft ein Verfahren zur Datenübertragung in einem Sensorbus-System und ein entsprechendes Sensorbus-System. Insbesondere betrifft die vorliegende Erfindung eine kostengünstige Topologie für automobile Anwendungen.

Um die Komplexität eines Ultraschall-Sensorsystems zur Objektdetektion in Straßenfahrzeugen zu reduzieren und Verkabelungskosten einzusparen, wird angestrebt, die derzeit vorherrschende sternförmige Topologie durch eine BusTopologie zu ersetzen. Pro Fahrzeugseite (Stoßfänger in Front oder Heck) werden typischerweise sechs Sensoren verbaut, die dann nicht mehr über separate Datenleitungen mit dem Steuergerät verbunden werden, sondern an einem gemeinsamen Datenbus angeschlossen sind. Vorzugsweise soll über die Busleitungen auch die Energieversorgung der Sensoren aus dem Steuergerät erfolgen, um die Anzahl der Leitungen zu minimieren.

Der Großteil der zu übertragenden Daten setzt sich aus den von den Sensoren empfangenen Echos mit ihren Attributen und Begleitinformationen zusammen, die an das Steuergerät übermittelt werden. Über den Bus muss somit pro Messzyklus grob die sechsfache Datenmenge als über eine einzelne Sensordatenleitung bei sternförmiger Topologie fließen, wenn die System-Performance vergleichbar gehalten werden soll. Gleichzeitig mit der Erhöhung der zu übertragenden Datenmenge sollen aber die Kosten für die Datenübertragung nicht signifikant steigen.

Grundsätzlich würde eine lineare bzw. ringförmige Topologie eine Versechsfachung der Datenrate auf dem Bus erfordern. Da ein sternförmig verkabelter Sensor bei gegebener Performance ca. 1000 Datenbits an Echoinformation erzeugt und diese Information in einer ca. 5 ms langen Pause zwischen zwei aufeinander folgenden Messzyklen von ca. 30 ms Länge übertragen wird, ist bei sternförmiger Topologie eine Datenrate von ca. 200 kBit/s erforderlich. Diese Datenrate ist bei technischen Systemen unter Verwendung der Strommodulationsverfahren, die mit einer NRZ-Kodierung (non return to zero, einfache 0/1-Bitkodierung) mit 8B9B-Kanalkodierung arbeiten (Bosch Ultraschall-Sensorgeneration 6 mit U-I-Schnittstelle, angelehnt an PSI5-Standard) möglich.

Das Bussystem müsste bei sechsfacher Datenrate ca. 1,2 Mbit/s übertragen. Für solch hohe Datenraten existierende Schnittstellenstandards sind beispielsweise CAN und Ethernet, die jedoch kostenintensiv sind.

Eine weitere Anforderung an Sensorsysteme sind die Signallaufzeiten, um eine hinreichende Aktualität empfangener Informationen am Steuergerät zu gewährleisten. Mit anderen Worten darf die mittlere Messzykluszeit nicht über Gebühr angehoben werden, um eine Performance-Verschlechterung gegenüber dem Stand der Technik nicht in Kauf nehmen zu müssen. Schließlich weisen im Stand der Technik bekannte Systeme darüber hinaus mitunter die Eigenschaft auf, dass während eines Echoempfangsfensters im Messzyklus keine Daten über den Bus gesendet werden können, da die über den Bus gesendeten Signale mit den empfangenen Umgebungssignalen elektromagnetisch interferieren könnten und das Signal-Rausch-Verhältnis unter einer zeitgleichen Verarbeitung leiden könnte.

Zusammengefasst können mit niedrigen Datenraten zwar kostengünstige Sensor-Bus-Systeme aufgebaut werden, wozu jedoch die Datenkommunikation auch während des Echo-Empfangs-Fensters (EEF) stattfinden muss. Eine Verringerung des Rauschpegels durch Erhöhung der Datenrate ist zwar möglich, aber mit den heute üblichen Codierungen (z.B. Manchester) nicht in ausreichendem Maße bei vertretbaren Kosten.

### Offenbarung der Erfindung

Erfindungsgemäß wird ein Sensorbus-System vorgeschlagen, welches insbesondere für aeronautische oder automobile Anwendungen ausgestaltet sein kann. Dieses umfasst ein elektronisches Steuergerät, welches mit einem Energiebordnetz (z.B. Traktionsbatterie oder Bordnetzbatterie) verbunden sein kann. Über diese Energiequelle versorgt das elektronische Steuergerät mehrere Sensoren des Sensorbus-Systems mit elektrischer Energie. Dies erfolgt über eine verdrillte Zweidrahtleitung zwischen dem elektronischen Steuergerät und den Sensoren. Die Sensoren können als Smart-Sensoren aufgefasst werden, wozu sie eine Logik zur Signalauswertung bzw. Signalverarbeitung aufweisen können. Beispielsweise können sie ein FPGA oder ein ASIC aufweisen oder einen Mikrocontroller bzw. Signalprozessor umfassen. Auch Mischformen der vorgenannten Ausgestaltungen sind möglich. Über die verdrillte Zweidrahtleitung des Sensorbus-Systems reicht das elektronische Steuergerät die elektrische Energie anteilig an die Sensoren weiter. Die Zweidrahtleitung kann insbesondere zwei Kupferadern aufweisen. Für die Kommunikation zwischen dem elektronischen Steuergerät und den Sensoren werden erfindungsgemäß durch die Sensoren ermittelte (z.B. aus der Umgebung empfangene oder anderweitig gemessene) Informationen I/Q-moduliert und über die verdrillte Zweidrahtleitung an das elektronische Steuergerät gesendet. Durch die I/Q-Modulation kann eine hinreichend hohe Datenrate selbst bei einer linearen Struktur oder einer Ringstruktur (also keine Stern-Struktur) des Sensorbus-Systems zur Kommunikation der aus der Umgebung bzw. dem Betrieb stammenden Sensordaten an das elektronische Steuergerät sichergestellt werden, selbst wenn die Sensoren im Zeitmultiplex-Verfahren an das elektronische Steuergerät senden. Überdies kann die elektromagnetische Verträglichkeit der Buskommunikation bezüglich des Empfangs beispielsweise von Ultraschallsignalen verbessert werden. Ein Verzicht auf eine Stern-Struktur ermöglicht überdies eine Verringerung der Gesamtleitungslänge der verdrillten Zweitdrahtleitung möglich.

Die Unteransprüche zeigen bevorzugte Weiterbildungen der Erfindung.

Die Sensoren können beispielsweise Ultraschallsensoren sein, welche bei Straßenfahrzeugen häufig in den Stoßfängern und/oder den Kotflügeln und/oder den Außenspiegeln zu finden sind, um Informationen über Umgebungsobjekte zu sammeln und zu signalisieren. Ähnliche Sensoren werden auch unabhängig vom Ultraschallspektrum durch Mikrofone/Schallsensoren bereitgestellt, um Informationen über Abrollgeräusche oder sonstige Umgebungsgeräusche auszuwerten und Rückschlüsse auf Fahrsituation und Fahrzeugzustand zu ziehen. Überdies sind mittlerweile Beschleunigungssensor-Cluster zur Crash-Früherkennung als sog. Peripherie-Beschleunigungssensors in Verwendung, welche im Bereich der Außenhaut eines Straßenfahrzeugs sehr frühzeitig in einem Crash-Fall die Vorbereitung von Sicherheitskomponenten auf einen etwaigen (zu einem späteren Zeitpunkt verifizierten) Crash ermöglichen. Auch Near Range Radar Sensoren könnten von der Erfindung profitieren, da sie ähnliche Anforderungen hinsichtlich Leistung der Stromversorgung, Datenraten und Herstellungskosten haben wie Ultraschallsensoren. Bevorzugt kann die I/Q-Modulation eine PSK (Phase-Shift Keying) und insbesondere Quadrature-Phase-Shift Keying (QPSK), 8PSK oder 16PSK umfassen. Bevorzugt kann auch eine Differential-Phase-Shift Keying (DPSK) oder eine Quadrature-Amplitude-Modulation (QAM) als I/Q-Modulation vorgesehen sein. Die Grundfrequenz der Modulation kann insbesondere deutlich oberhalb des für die ultraschallbasierte Umgebungsdetektion üblicherweise verwendeten 50 kHz-Bandes liegen, insbesondere bei 100 kHz oder höher. Das durch die Modulation des Trägers entstehende Spektrum enthält dann im 50 kHz-Band nur eine geringe Leistungsdichte. Insbesondere können sämtliche über die verdrillte Zweidrahtleitung mit dem elektronischen Steuergerät verbundene Sensoren eine voneinander verschiedene Grundfrequenz für die I/Q-Modulation verwenden, um eine zeitgleiche Datenübertragung oberhalb des Ultraschallbandes vorzunehmen. Auf diese Weise kann auf ein Zeitmultiplex-Verfahren gegebenenfalls verzichtet werden und somit die mittlere Datenrate gegenüber dem Stand der Technik erhöht werden.

Um die Dämpfungseigenschaften der verdrillten Zweidrahtleitung zu kompensieren, kann entweder senderseitig, also im jeweiligen Sensor, eine Vorverzerrung des I/Q-modulierten Signals erfolgen oder alternativ oder zusätzlich eine nachträgliche (empfängerseitige) Dämpfungskompensation im elektronischen Steuergerät vorgenommen werden. Hierzu kann ein Equalizer verwendet werden, der den Einfluss der Dämpfung der verdrillten Zweidrahtleitung (zumindest anteilig) behebt. Somit kann die Erkennungsrate bzw. die für eine hinreichende Signalgüte erforderliche Energie verringert werden.

Die Sensoren können eingerichtet sein, während eines Empfangs von (Umgebungs-)Signalen (also Schall, Ultraschall, Beschleunigung, o.ä.) die empfangenen Informationen I/Q-moduliert an das elektronische Steuergerät zu senden. Insbesondere kann eine kontinuierliche Datenübertragung zwischen dem Sensor und dem elektronischen Steuergerät dafür sorgen, dass eine bestmögliche Aktualität der am elektronischen Steuergerät eintreffenden Informationen gewährleistet ist.

Um eine Synchronisierung des elektronischen Steuergerätes und der von den Sensoren gesandten Bussignale zu erleichtern, kann das elektronische Steuergerät eingerichtet sein, ein amplitudenmoduliertes Trägersignal über die Zweidrahtleitung an die Sensoren zu senden. Aus diesem Trägersignal können die Sensoren einen Takt für die zu sendenden Signale generieren bzw. das Trägersignal unmittelbar entsprechend der empfangenen Informationen mittels I/Q-Modulation modulieren. Die Trägerfrequenz bzw. die Trägerfrequenzen können sich in einem Frequenzbereich zwischen 60 kHz und 500 kHz befinden. Beispielsweise können bei sechs Sensoren die Trägerfrequenzen einen jeweiligen Abstand von ca. 65 bis 80 kHz aufweisen. Die Zuordnung kann bei Inbetriebnahme des Sensorbus-Systems durch das elektronische Steuergerät erfolgen.

Nachfolgend werden weitere Ausgestaltungen und Merkmale offenbart, welche bei erfindungsgemäßen Ausführungsformen Verwendung finden können. Diese Ausführungen sind als lediglich exemplarisch aufzufassen und in keiner Weise den Schutzbereich der beigefügten Ansprüche limitierend oder erweiternd aufzufassen.

Zur Datenübertragung wird ein sinusförmiges Trägersignal verwendet, das mit dem Datenstrom im Sensor moduliert wird. Im Steuergerät wird das modulierte Signal empfangen und demoduliert, um den Datenstrom zurück zu gewinnen. Unter den vielen möglichen Modulationsarten, wie z.B. Frequenz-, Phasen-, oder Amplitudenmodulation eignet sich insbesondere die digitale Phasenmodulation in Form einer I/Q-Modulation, um die vorliegenden Anforderungen zu erfüllen.

Bei Verwendung einer quaternären Phasenmodulation (QPSK) bzw. einer ihrer Varianten (offset-QPSK oder differentielle QPSK) lässt sich das Leistungsdichtespektrum des erzeugten Bandpasssignals bei geeigneter Wahl der Trägerfrequenz und der Symbolrate so formen, dass nur über 60 kHz signifikante Leistung erzeugt wird und bei gleichzeitiger geeigneter Pulsformung der Symbole lässt sich das Spektrum auch nach oben hin unterhalb des störempfindlichen Mittelwellenbereichs halten, der bei 500 kHz beginnt. Die Datenrate beträgt in dieser Auslegung 500 kBit/s bei 250 kBaud.

Die spektrale Effizienz ist dabei besser als bei konventioneller Manchester-Codierung. Sie lässt sich durch Phasenmodulation höherer Ordnung noch verbessern. So ist sie bei 8-PSK (je 3 Bits werden zu einem Symbol kodiert, wobei sich die Phasenlage zwischen benachbarten Symbolen um 45° unterscheidet) z.B. 50% höher als bei QPSK (90° Phasenunterschied benachbarter Symbole).

Die Konzentration der Signalenergie auf ein definiertes Frequenzband erlaubt die Datenübertragung über eine Busleitung, die gleichzeitig zur Energieversorgung der Sensoren benutzt wird.

Bei (differentieller) Spannungsmodulation kann durch Entkoppelkondensatoren und -Spulen spektral zwischen niederfrequenter Stromversorgung und höherfrequenter Datenübertragung separiert werden. Bei Strommodulation ist das Übersprechen der Modulation in den Ultraschallempfangskanal nicht störend, da keine signifikante Signalleistung unter 60 kHz vorhanden ist. Höhere Frequenzanteile tragen nicht zum Rauschen im Ultraschallempfangskanal bei. Auf Entkoppelkondensatoren und -spulen kann hierbei verzichtet werden, was die Hardware-Kosten minimal hält.

### Mögliche Varianten:

Weitere Möglichkeiten zur Ausgestaltung erfindungsgemäßer Gegenstände werden nachfolgend exemplarisch wiedergegeben.

Die übertragbare Datenrate lässt sich bei gegebener Bandbreite des verfügbaren Kanals steigern, indem die Ordnung des Modulationsverfahrens erhöht wird. Beispielsweise erlaubt 8-PSK die Kodierung von je 3 Bits in ein Symbol, wobei die Symbole einen Abstand von 45° voneinander im Phasenwinkel besitzen. Mit 16-PSK können je 4 Bits pro Symbol übertragen werden, was die Datenrate gegenüber QPSK verdoppelt.

Mit der Erhöhung der Ordnung steigt auch der Aufwand zur Dekodierung im Empfänger, da die Abstände zwischen den Symbolen sinken und eine höhere Präzision der Signalverarbeitung erforderlich ist bei gleichzeitig größerer Störanfälligkeit gegenüber elektromagnetischen Störungen aus der Umgebung des Systems bzw. Fahrzeugs.

Besonders vorteilhaft und kostensparend ist die Verwendung einer differentiellen Phasenmodulation, bei der die Information in der Differenz des Phasenwinkels zum vorhergehenden Symbol kodiert wird. Dies erspart die aufwendige Detektion des absoluten Phasenwinkels im Empfänger, womit eine phasenstarre Synchronisierung des Empfängers mit dem Sender entbehrlich wird.

Zur weiteren Steigerung der Datenrate ist auch der Einsatz einer kombinierten Phasen- und Amplitudenmodulation möglich (sog. QAM-Modulation höherer Ordnung), was den Aufwand bei der Dekodierung allerdings erhöht.

Aufwendig ist insbesondere die hierfür notwendige phasenstarre Synchronisierung des Demodulators auf die Trägerfrequenz des Senders. Diese wird üblicherweise mit Hilfe eines Synchronisierungsalgorithmus im Empfänger erzielt, der mittels Phasenregelschleife die Abtastfrequenz nachregelt.

Auf einen solchen Synchronisierungsalgorithmus könnte verzichtet werden, wenn im Rahmen einer weiteren vorteilhaften Ausgestaltung der Erfindung die Trägerfrequenz vom Empfänger (Steuergerät) erzeugt und an den Sender (Sensor) übermittelt wird. Diese Übermittlung kann in Form einer Spannungsmodulation auf der Busleitung vorgenommen werden, die gleichzeitig zur Strommodulation der Datenübertragung durch den Sensor stattfindet.

Vorteilhaft ist auch, den zuvor gemessenen Amplituden- und Phasengang des Übertragungsmediums (z.B. verdrilltes Adern Paar) im Empfänger zu kompensieren, indem ein entsprechender Equalizer eingesetzt wird. Dieser macht die Amplituden- und Phasenverzerrungen rückgängig, ehe die Symbole abgetastet werden, wodurch die Robustheit des Verfahrens gegenüber sonstigen Störeinflüssen gesteigert wird.

Die am Bus angeschlossenen Sensoren (Sender) können sich das Übertragungsmedium entweder per Zeitmultiplex-Verfahren aufteilen oder aber im Frequenz Multiplex-Verfahren betrieben werden. Hierbei erhält jeder Sender eine andere Trägerfrequenz innerhalb des zur Verfügung stehenden Frequenzbandes und sendet gleichzeitig mit allen anderen Sensoren. Die Symbolrate wird entsprechend der Anzahl der Sender reduziert, um die Bandbreite der erzeugten Signale so weit zu reduzieren, dass sich die Spektren nicht gegenseitig überlappen. Im Empfänger erfolgt eine Selektion der Sender durch spektrale Filterung des Empfangssignals mittels Bandpassfilter vor der Demodulation der einzelnen Datenströme.

Die physische Realisierung sowohl des Modulations- als auch des Demodulationsverfahrens erfolgt vorzugsweise durch digitale Signalverarbeitung. Die Implementierung kann wahlweise in Software erfolgen, die auf einem Signalprozessor oder Mikro-Controller läuft, oder in Form von digitaler Hardware auf einem ASIC oder FPGA innerhalb des jeweiligen Sensors (insbesondere Ultraschallsensors) bzw. Empfängers (Steuergerät) umgesetzt werden. Mischformen sind ebenfalls möglich.

Die Anwendung des Verfahrens ist nicht auf Ultraschallsysteme beschränkt. Es kann in vielen anderen Sensorsystemen verwendet werden, z.B. road noise sensing system, near range radar sensor und airbag system (peripheral acceleration sensors). Dabei können u.a. die Trägerfrequenz und Symbolrate an die jeweiligen Anforderungen angepasst werden.

Bevorzugt weist das Steuergerät den einzelnen Sensoren dynamische Zeitfenster zu, in denen kommuniziert werden soll bzw. darf. Ebenfalls können Vorgaben zu den Dateninhalten, die kommuniziert werden sollen/dürfen, den Sensoren dynamisch zugewiesen werden. Hierzu können die Sensoren bereits gespeicherte Datensätze aufweisen, welche die unterschiedlichen Verhaltensweisen bezüglich des Empfangs von Umgebungssignalen, deren Auswertung und der Kommunikation der Umgebungssignale bzw. auf Basis der Umgebungssignale erhaltene Informationen definieren. Auf diese Weise kann die Kommunikation zur Anpassung der Verhaltensweisen der Sensoren durch das elektronische Steuergerät geringgehalten werden. Mit anderen Worten werden die Verhaltensweisen sensorspezifisch durch das Steuergerät aktiviert, ohne dass Inhalte zur Definition der Verhaltensweisen ebenfalls über die verdrillte Zweidrahtleitung kommuniziert werden müssten.

Die Verhaltensweise kann auch dergestalt vordefiniert sein, dass Anteile der empfangenen Rohdaten im Wesentlichen unverändert über die verdrillte Zweidrahtleitung an das elektronische Steuergerät gesendet werden, während andere Anteile im Sensor ausgewertet und Ergebnisse der Auswertung über die verdrillte Zweidrahtleitung an das elektronische Steuergerät gesendet werden. Insbesondere kann als Verhaltensweise auch kommuniziert werden, dass ein bestimmter Sensor in einem bestimmten Betriebszustand bzw. beim Eintreten vorbestimmter Ereignisse überhaupt keine Daten über den Bus bzw. die verdrillte Zweidrahtleitung senden soll.

Gemäß einem zweiten Aspekt der vorliegenden Erfindung wird ein Verfahren zur Datenübertragung in einem Sensorbus-System vorgeschlagen, in welchem mehrere Sensoren über eine verdrillte Zweidrahtleitung mit einem elektronischen Steuergerät informationstechnisch und energetisch verbunden sind. Grundsätzlich werden die Sensoren durch das elektronische Steuergerät mit (Bordnetzspannung, Batteriespannung, o.ä.) Energie versorgt. Die energetische Versorgung der Sensoren erfolgt über die verdrillte Zweidrahtleitung, welche auch zur Informationsübertragung im Sensorbus-System verwendet wird. Wenn die Sensoren Umgebungsinformationen bzw. anderweitige Sensordaten ermittelt haben, werden diese Daten erfindungsgemäß I/Q-moduliert und durch die Sensoren über die verdrillte Zweidrahtleitung an das elektronische Steuergerät gesendet. Durch die I/Q-Modulation können Bus-Topologien (insbesondere linearer oder ringförmiger Bus) gewählt werden, welche im Stand der Technik aufgrund der dort nicht erreichten hinreichenden Datenrate nicht verwendbar waren. Somit kann die Leitungslänge verringert und der Verkabelungsaufwand eines Sensorbus-Systems in erfindungsgemäßer Weise verringert werden.

### Kurze Beschreibung der Zeichnungen

Nachfolgend werden Ausführungsbeispiele der Erfindung unter Bezugnahme auf die begleitende Zeichnung im Detail beschrieben. Es zeigen:
- Figur 1: eine schematische Darstellung eines Fortbewegungsmittels mit einem erfindungsgemäß ausgestalteten Sensorbus-System;
- Figur 2: eine schematische Darstellung der Komponenten eines erfindungsgemäß verwendbaren Sensors in Form eines Ultraschallsensors;
- Figur 3: eine schematische Darstellung von Komponenten eines Empfängers in Form eines elektronischen Steuergerätes;
- Figur 4: ein Leistungsdichtespektrum des modulierten Stromsignals am Ausgang eines Sensors;
- Figur 5: ein Leistungsdichtespektrum des D-QPSK-Signals am Eingang des Empfängers und nach dem Equalizer;
- Figur 6: ein Konstellationsdiagramm sowie ein Histogramm der Phasenlage der Symbole im Empfänger (elektronisches Steuergerät) ohne Equalizer;
- Figur 7: ein Konstellationsdiagramm sowie ein Histogramm der Phasenlage der Symbole im Empfänger (elektronisches Steuergerät) nach dem Equalizer;
- Figur 8: ein Flussdiagramm, veranschaulichend Schritte eines Ausführungsbeispiels eines erfindungsgemäßen Verfahrens zur Datenübertragung in einem Sensorbus-System; und
- Figur 9: zeigt Timing Diagramme unterschiedlicher Ausführungsbeispiele der vorliegenden Erfindung.

### Ausführungsformen der Erfindung

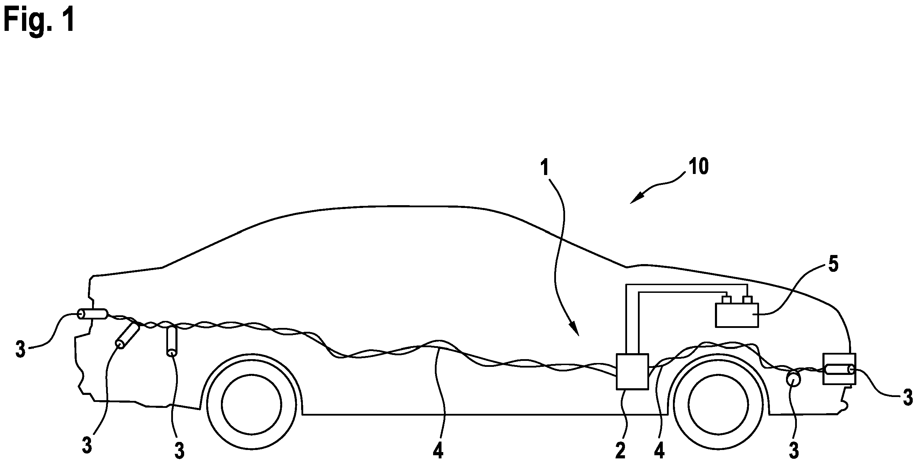

Figur 1 zeigt einen PKW 10, in welchem ein Ausführungsbeispiel eines erfindungsgemäßen Sensorbus-Systems 1 angeordnet ist. Die Sensoren 3 sind als Ultraschallsensoren im vorderen Stoßfänger sowie im hinteren Stoßfänger angeordnet und über eine verdrillte Zweidrahtleitung 4 mit einem elektronischen Steuergerät 2 informationstechnisch sowie energetisch verknüpft. Sowohl das elektronische Steuergerät 2 als auch die Sensoren 3 werden über eine Starterbatterie 5 mit elektrischer Energie versorgt.

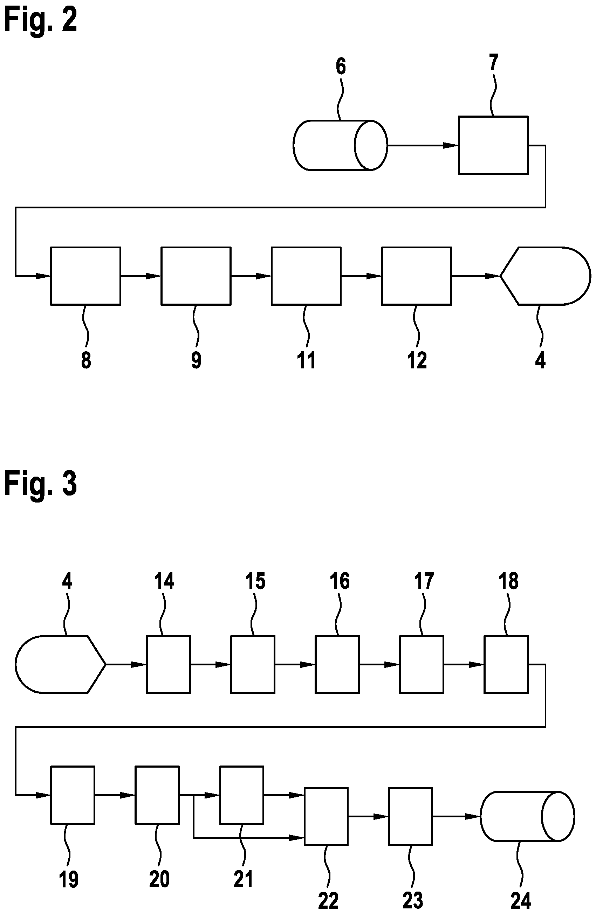

Figur 2 zeigt Komponenten eines Senders (Bezugszeichen 3 in Figur 1). Binäre Eingangsdaten 6 werden als Binärdatenstrom in eine Rahmung 7 geschickt, wo sie mit einer Präambel versehen werden und eine zyklische Redundanzprüfung ermöglicht wird. Als binäre Worte werden die Daten anschließend einem D-M-PSK-Modulator 8 zugeführt, von welchem sie in komplexwertige Symbole umgewandelt werden. Im Falle einer QPSK ergibt ein aus zwei Bits bestehendes Datenwort ein Symbol. Die Übergänge zwischen den Symbolen werden mittels eines Pulsformungsfilters 9 geglättet, wodurch Oberwellen im resultierenden Spektrum weitgehend unterdrückt werden. Im UP-Konverter 11 wird das komplexe Basisbandsignal durch Multiplikation mit einer Trägerfrequenz in ein reelles Bandpasssignal umgewandelt, welches nach einem Digital/AnalogWandler 12 als modulierter Strom auf die Datenleitung aufgeprägt wird.

Figur 3 zeigt Komponenten eines Empfängers in Form eines elektronischen Steuergerätes, welcher an die verdrillte Zweidrahtleitung 4 angeschlossen ist. Von hier aus erhält der Empfänger das analoge Eingangssignal, welches durch die Zweidrahtleitung 4 bandpassgefiltert ist. Nach einem Anti-Aliasing-Filter 14 wird das bandpassgefilterte Signal einem Analog/Digital-Konverter 15 zugeführt, welcher im Beispiel eine Auflösung von ≥ fünf Bit aufweist. Das digitale Ausgangssignal des Analog/Digital-Konverters 15 wird nach Durchlaufen eines Equalizers 16, welcher einen Infinite Impulse Response (IIR) Filter und einen Finite Impulse Response (FIR) Filter aufweist, einem Abwärtswandler 17 zugeführt. Hier wird das empfangene Signal mittels Multiplikation mit der Trägerfrequenz in das komplexe Basisband transformiert. Dieses wird anschließend einem angepassten Filter 18 zugeführt, welcher die hochfrequenten spektralen Signalkomponenten unterdrückt, wozu es der Pulsform angepasst ist und als Tiefpassfilter wirkt. Mit dem Symbolsynchronisierer 19 wird die Abtastung der Symbole hinsichtlich Frequenz und optimalem Abtastzeitpunkt mit dem Datenstrom synchronisiert. Die abgetasteten Symbole werden in einem D-M-PSK-Demodulator 20 demoduliert und in einem Framesynchronisier 22 werden die Frames anhand der in einem Präambel-Detektor 21 detektierten Präambel-Bit-Folgen voneinander getrennt. Mit Hilfe eines zyklischen Redundanzchecks (CRC) 23 werden die CRC-Prüfsummen-Bits hinsichtlich etwaiger Übertragungsfehler untersucht und korrigiert. Optional kann der CRC 23 auch durch einen Block-Code ersetzt werden, der ebenfalls eine automatische Fehlerkorrektur ermöglicht, sofern der verwendete Block-Code dies unterstützt. Die Ausgangsdaten des CRC 23 werden der Logik 24 des Empfängers zugeführt und die hier erhaltenen Erkenntnisse können für die Fahrerassistenz oder das autonome Fahren Verwendung finden.

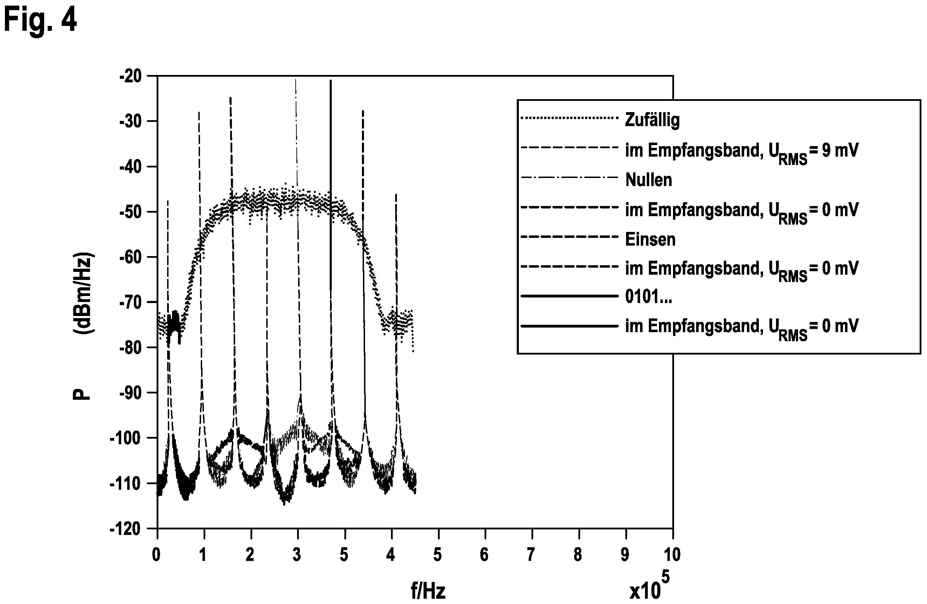

In Figur 4 wird ein beispielhaftes Leistungsdichtespektrum gezeigt, welches das mit D-QPSK-modulierte Stromsignal am Ausgang des Sensors (Bezugszeichen 3 in Figur 1) aufweist. Deutlich erkennbar ist die Konzentration der Signalleistung auf einen Frequenzbereich zwischen 100 kHz und 400 kHz, während die sensitiven Frequenzbänder unterhalb von 60 kHz und oberhalb von 500 kHz nicht signifikant belegt sind. Auf der Ordinate ist die Leistungsdichte, auf der Abszisse die Frequenz in Hz aufgetragen.

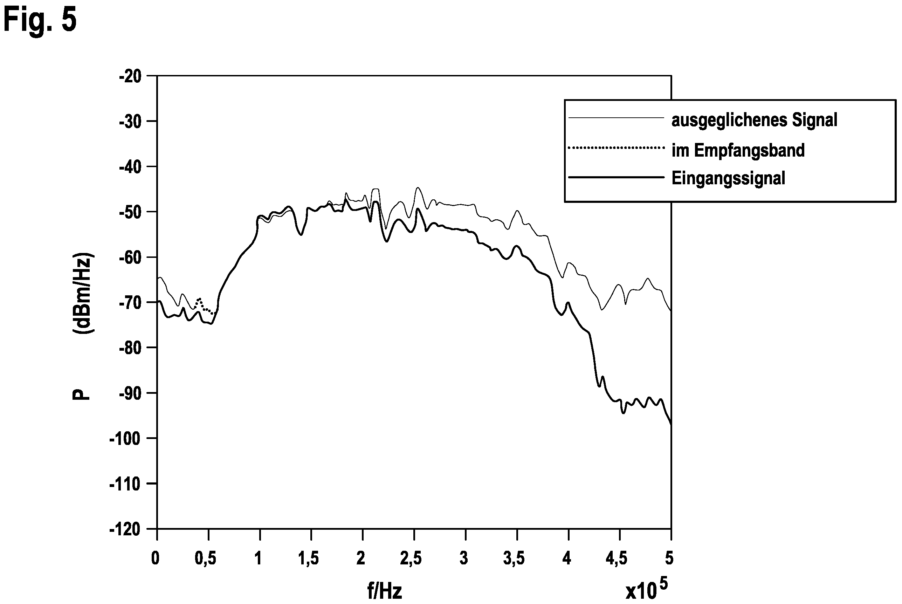

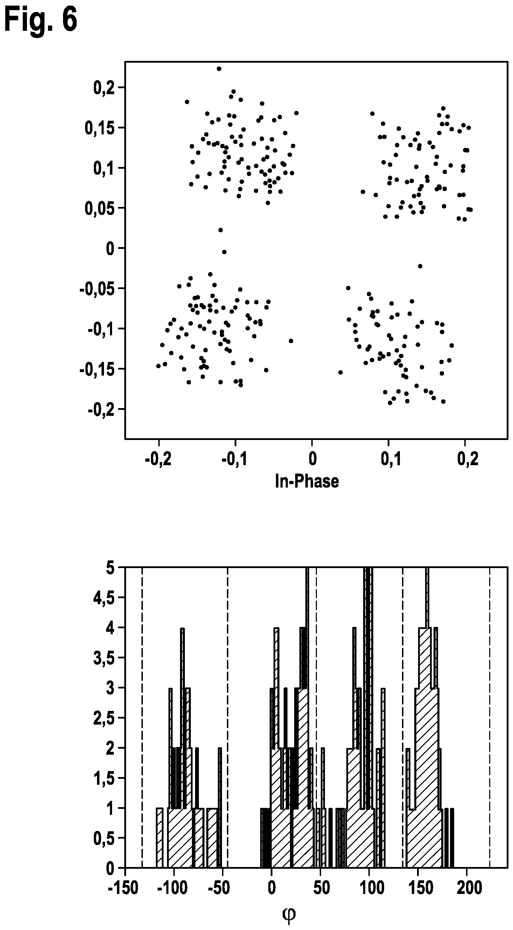

Figur 5 zeigt das Leistungsdichtespektrum des D-QPSK-Signals am Eingang des elektronischen Steuergerätes im Vergleich zu dem nach dem Equalizer erhaltenen Signal. Das vom Sensor erzeugte modulierte Signal wird bei der Übertragung über die Busleitung bedämpft, wobei üblicherweise höhere Frequenzen stärker bedämpft werden als tiefe Frequenzen. Dies entspricht einer Tiefpass-Charakteristik der verdrillten Zweidrahtleitung. An selbige angeschlossene weitere Sensoren tragen mit ihrer kapazitiven Last zusätzlich zur Tiefpass-Charakteristik bei. Mit der Dämpfung der Amplitude geht auch eine Phasendrehung der Signale einher, die mit der Frequenz zunimmt. Ohne Equalizer im elektrischen Steuergerät (Empfangspfad bzw. Empfänger) wäre die Dekodierung der Symbole gegebenenfalls nur unvollkommen möglich, da die Pulsform verzerrt wäre und Inter-Symbol-Interferenz eine zuverlässige Trennung der Symbole verhindern würde. Dieser Zusammenhang ist in Figur 6 dargestellt.

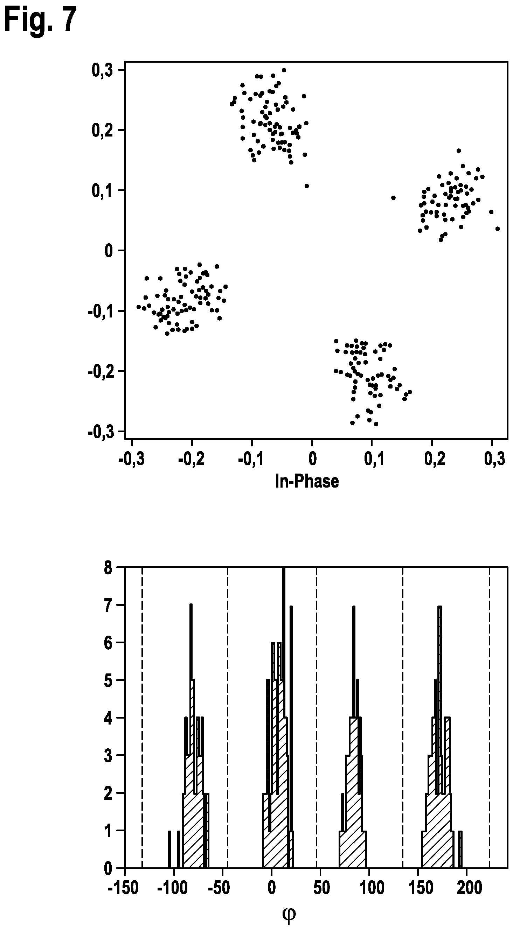

Figur 6 zeigt ein Konstellationsdiagramm und Histogramm der Phasenlage der Symbole im Empfänger ohne Equalizer. Im oberen Diagramm ist die Quadratur über der In-Phase aufgetragen, während im unteren Diagramm das synchronisierte Demodulations-Histogramm bei 250 kBaud = F₀ über dem Winkel aufgetragen ist. Durch einen der Übertragungsfunktion angepassten Equalizer im Empfänger (Allpass-Filter in Kombination mit Hochpass-Filter) kann die Verzerrung durch den Kanal (die Bus-Leitung) rückgängig gemacht werden und die Dekodierung der Symbole gelingt ohne Fehler. Dieser Zusammenhang ist in Figur 7 aufgetragen.

Figur 7 zeigt ein Konstellationsdiagramm und ein Histogramm der Phasenlage der Symbole im Empfänger (elektronisches Steuergerät) nach Behandlung durch den Equalizer. Im oberen Diagramm ist die Quadratur über der In-Phase aufgetragen, während im unteren Diagramm das synchronisierte

Demodulationshistogramm bei 250 kBaud = F₀ über dem Winkel aufgetragen sind. Aufgrund der Behandlung mittels des Equalizers kann die Verzerrung durch den Kanal (verdrillte Zweidrahtleitung) rückgängig gemacht werden und die Dekodierung der Symbole gelingt ohne Fehler.

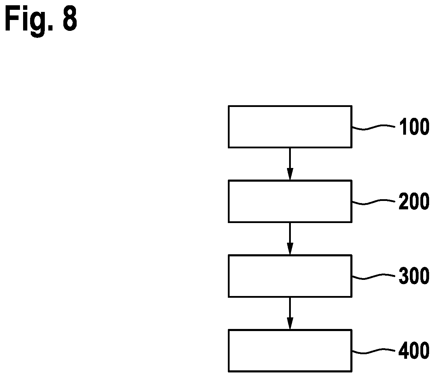

Figur 8 zeigt Schritte eines Ausführungsbeispiels eines erfindungsgemäßen Verfahrens zur Datenübertragung in einem Sensorbus-System, in welchem mehrere Smart-Sensoren und ein elektronisches Steuergerät informationstechnisch sowie energetisch durch eine verdrillte Zweidrahtleitung miteinander verbunden sind. In Schritt 100 wird Energie aus einer BordnetzBatterie mittels des elektronischen Steuergerätes verwendet, um die Sensoren mit für ihren Betrieb sowie für die Kommunikation erforderlicher elektrischer Energie zu versorgen. Dies erfolgt über die verdrillte Zweidrahtleitung. In Schritt 200 werden die Sensoren verwendet, um Betriebs- und/oder Umgebungsinformationen zu empfangen. Die Sensoren bereiten den Versand über die verdrillte Zweidrahtleitung in Schritt 300 durch eine I/Q-Modulation der Informationen vor und senden die I/Q-modulierten Informationen in Schritt 400 über die verdrillte Zweidrahtleitung an das elektronische Steuergerät. Aufgrund der gegenüber dem Stand der Technik erhöhten Datenrate kann eine lineare bzw. eine ringförmige Bustopologie verwendet werden, während im Stand der Technik eine sternförmige Topologie zwischen den Sensoren und einem (zentralen) Steuergerät stets erforderlich ist.

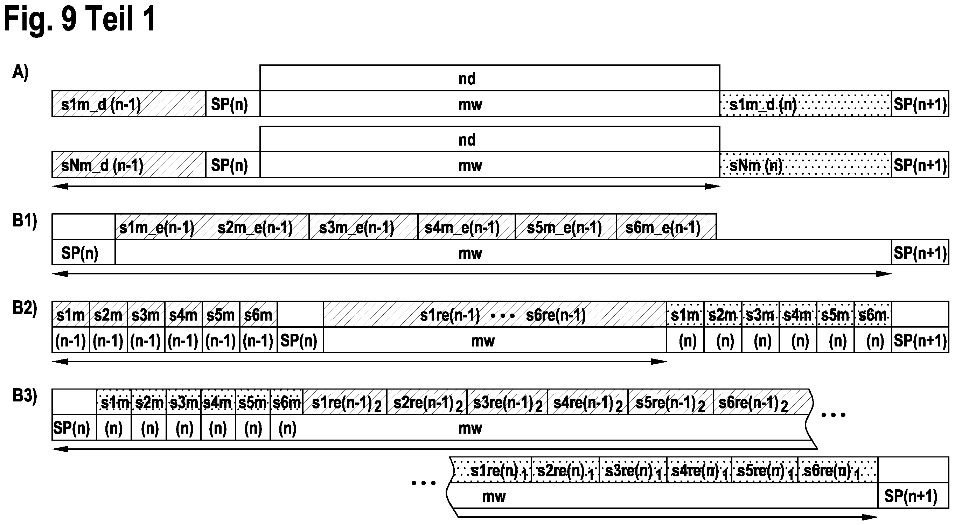

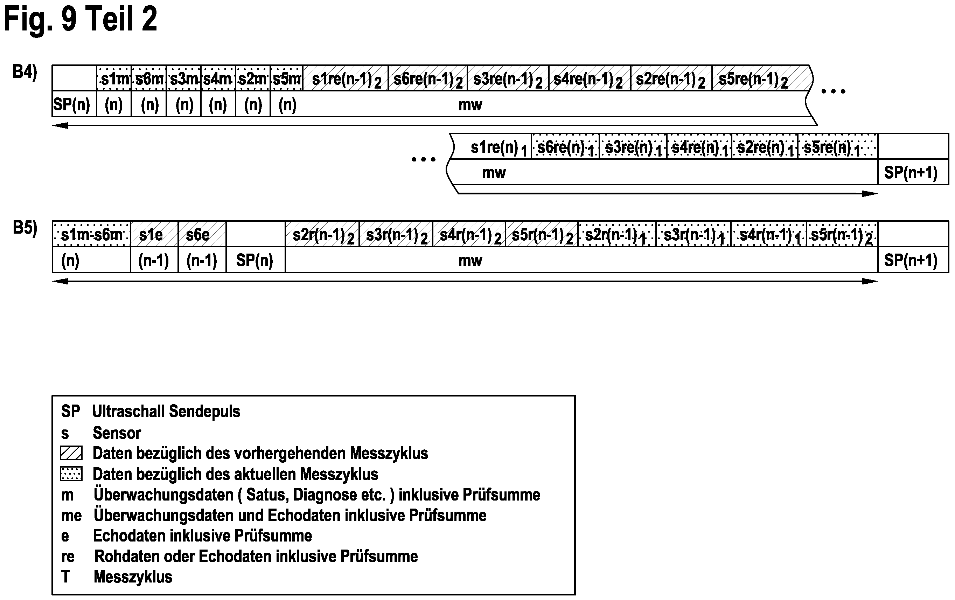

Figur 9 zeigt Timing Diagramme unterschiedlicher Ausführungsbeispiel der vorliegenden Erfindung.

In Figur 9 sind die erfindungsgemäßen Ausführungsformen bespielhaft dargestellt und werden nachfolgend im Detail beschrieben.

Teildiagramm A) stellt einen typischen Messzyklus eines heutigen Punkt-zu-Punkt-Systems dar.

Der Messzyklus T2 beginnt mit der Übertragung der Sensordaten inkl. Monitoring/Diagnosegrößen und Checksummen s1m_d(n-1) gefolgt von der Sendeaufforderung und des Ultraschall-Sendepuls SP(n)* und dem anschließenden Echoempfang im Messfenster. Danach beginnt der Messzyklus von vorne. Das Schema findet für alle N Sensoren im System parallel Anwendung. Ein Sensor kann auch nur (Kreuzecho)Empfänger sein. In diesem Fall kann in der mit SP bezeichneten Phase eine andere Aktion im Sensor ausgeführt werden.

Die Dauer der Datenkommunikationsphase ist bestimmt durch die zur Verfügung stehenden Datenrate und die Anzahl der zu übertragenden Bits. In typischen Systemen dauert diese Phase bis zu 5ms bei rund 200kBit/s. Das Messfenster ist im Wesentlichen durch die Schalllaufzeit und die geforderte Messreichweite bestimmt und beträgt bei 5m Reichweite ca. 30ms. D.h. das Kommunikationsfenster ist im Vergleich zum Messfenster deutlich kürzer. Nachteilig bei heutigen Systemen sind neben der Messzyklusverlängerung, dass eine Latenz zwischen Echodetektion und Datenübertragung von bis zu einem kompletten Messzyklus entsteht.

Das hier vorgeschlagene Verfahren kann für Datenraten >500kBit/s eingesetzt werden.

Weitere Kommunikationsschemata für das erfindungsgemäße Verfahren werden in den Teildiagrammen B1) bis B5) visualisiert.

Im Busbetrieb werden erfindungsgemäß folgende Schemata vorgeschlagen:

### B1) Optimierung der Messdatenwiederholrate

In diesem Messbetrieb verkürzt sich der Messzyklus dadurch, dass die einzelnen Sensoren nacheinander während des Echoempfangs kommunizieren. Ein zusätzliches Kommunikationsfenster außerhalb des Messbetriebs entfällt. Vorteilhafterweise werden die vollständigen Datenpakete eines Sensors komplett übertragen bevor der nächste Sensor an der Reihe ist, um die bestmögliche Ausnutzung der Nettodatenrate zu erhalten. Nachteilig hier ist die Latenz von bis zu fast zwei (verkürzten) Messzyklen (wenn im gezeigten Beispiel Echos von Sensor 6 zu Beginn des Zyklus(n-1) detektiert wurden, aber erst am Ende von Zyklus(n) übertragen werden).

### B2) Optimierung für maximale Bandbreitenausnutzung

Unter der Randbedingung, dass die gesamte Messzykluszeit sich gegenüber einem heutigen System nicht verlängern soll, gleichzeitig aber die gesamte Kommunikationsdauer ausgenutzt wird, bietet sich B2) an. Die Kommunikationsfenster pro Sensor können auch von unterschiedlicher Länge sein, sofern unterschiedliche Dateninhalte kommuniziert werden sollen. Dieser Modus bietet sich z.B. zur Rohdatenübertragung an. Der Sensorstatus bzw. die Monitoring-Größen werden zur Reduktion von Fehlertoleranzzeiten zwischen Messzyklus (n-1) und (n) geschickt. Die Sensor(roh)daten des Vorgängerzyklus werden im Messfenster des Nachfolgezyklus komplett übertragen. Variante B2) kann ein starres Zeitschema verwenden, erzeugt allerdings auch eine Latenz in den übertragenen Sensordaten.

### B3) Latenzminimierte Übertragung

Im Gegensatz zu B1) und B2) werden in diesem Modus Daten aus dem aktuellen Zyklus und Vorgängerzyklus übertragen. Zunächst wird pro Sensor die Monitor- und Diagnoseinformation aus dem aktuellen Zyklus übertragen d.h. die Sensoreigendiagnose findet während der mit "SP" gekennzeichneten Phase statt. Es folgt die Übertragung von restlichen Daten aus dem Vorgängerzyklus. Es schließt sich die Übertragung der bereits detektierten Echos/bzw. Rohdaten aus dem aktuellen Zyklus bis zum Start der Datenübertragung an. Dieser Modus minimiert die Latenz gegenüber heute für die Monitoring- und Diagnoseinformation heute um einen Messzyklus, dito für die im Nah- mittleren Entfernungsbereich detektierten Echos.

Dieser Modus ist insbesondere für sicherheitsrelevante Anwendungen interessant, bei denen es auf kurze Fehlertoleranzzeiten und geringe Latenz ankommt.

### B4) Optimiert für Funktionen bei höheren Geschwindigkeiten

Während bei B1) bis B3) die Reihenfolge der Sensoren, welche die Daten übertragen, in aufsteigender Reihenfolge ohne Beschränkung der Allgemeinheit dargestellt waren, hebt B4) und B5) darauf ab, dass die Reihenfolge der Zeitschlitze, in denen die Sensoren kommunizieren können, variabel zuweisbar sind. Für ein USS-System ist es z.B. bei höheren Geschwindigkeiten, wenn die Parklückenvermessung oder tote-Winkel Detektion aktiv ist, vorteilhaft, dass die Ecksensoren S1 und S6 prioritär ihre Daten übertragen können (B4). Oder allgemeiner: geschwindigkeits-bzw. funktionsabhängige Zuweisung der Sendereihenfolge der Busteilnehmer und der Dateninhalte.

### B5) Optimiert für Funktionen, die im Frontbereich Rohdatenübertragung benötigen

In Variante B5) ist die Grundidee, dass manche Funktionen davon profitieren, wenn eine Rohdatenauswertung von Sensoren im Steuergerät möglich ist, gleichzeitig aber die Übertragungsbandbreite so beschränkt ist, dass nicht alle Sensoren Rohdaten übertragen können. Es wird vorgeschlagen, beispielsweise Bandbreite-schonend die im Sensor ausgewerteten Echodaten der Ecksensoren zu übertragen und von den mittleren Sensoren die Rohdaten. Dabei werden bis zur Mitte des Messfensters die Daten aus dem Vorgängerzyklus übertragen (Echos und "zweite Hälfte der Rohdaten) sowie die Rohdaten aus dem Entfernungsbereich bis zur Mitte des Messfensters (ca. 2,5m). Monitoring-Größen werden vom aktuellen Zyklus übertragen. Eine geringfügige Erhöhung der Messzykluszeit wird in diesem Fall in Kauf genommen.

### Allgemeiner kann dies wie folgt formuliert werden:

Die Art der Daten (Echo oder Rohdaten) sowie der hierfür verfügbare Zeitslot und im Falle Rohdaten auch der Zeitbereich kann dynamisch von Zyklus zu Zyklus variiert werden. Darüber hinaus kann es auch einen Mischbetrieb von Echo und Rohsignaldatenübertragung geben.
i. So könnte man auch gezielt Sensoren keinen Slot zuweisen, also Sensoren auf die man ggfs. in der aktuellen Messung verzichten könnte (z.B. beim Remoteecho Sensor). Diese Sensoren würden dann nur Statusdaten übertragen.
ii. Im Falle von Rohdaten könnte der Zeitausschnitt variabel gestaltet werden, so dass z.B. bei höheren Geschwindigkeiten nur der Clutterbereich oder nur der Fernbereich übertragen (für die Straßenzustandsschätzung) oder der unmittelbare Nahbereich nicht übertagen wird. Beispielsweise können bei geringen Geschwindigkeiten Daten betreffend den Fernbereich von der Übertragung ausgeschlossen werden, da der Fernbereich bei geringen Geschwindigkeiten keine Kollisionsrelevanz aufweist.
iii. Auch eine Kombination ist möglich: Beispielsweise können stets das Ausschwingen des Sensors und die Echos übertragen werden. Alternativ oder zusätzlich kann immer der Clutterbereich oder der Noisebereich zusätzlich zu den Echos übertragen werden.

Zusammenfassend kann gesagt werden, dass auf Basis des erfindungsgemäßen Verfahrens zur Datenübertragung sich für ultraschallbasierte Fahrerassistenzsysteme hinsichtlich der Flexibilität (Auswahl über a priori Konfiguration und/oder im laufenden Betrieb) und Ausgestaltung der Bündelung und zeitlichen Anordnung von Datenpaketen neue Möglichkeiten ergeben.

## Patentansprüche

1. Sensorbus-System (1) umfassend
- ein elektronisches Steuergerät (2),
- mehrere Sensoren (3), wobei die Sensoren (3) Ultraschallsensoren umfassen, und
- eine verdrillte Zweidrahtleitung (4) zwischen dem elektronischen Steuergerät (2) und den Sensoren (3), wobei das elektronische Steuergerät (2) eingerichtet ist, die Sensoren (3) über die verdrillte Zweidrahtleitung (4) mit elektrischer Energie zu versorgen, und
- die Sensoren (3) eingerichtet sind, empfangene Umgebungsinformationen I/Q-moduliert über die verdrillte Zweidrahtleitung (4) an das elektronische Steuergerät (2) zu senden und während eines Empfangs von Signalen die empfangenen Umgebungsinformationen I/Q-moduliert über die verdrillte Zweidrahtleitung (4) an das elektronische Steuergerät (2) zu senden,
- wobei die Sensoren (3) Datensätze repräsentierend vorkonfigurierte Verhaltensweisen bezüglich
- der Aussendung von Messsignalen in eine Umgebung und/oder
- des Empfangs von Echos der Messsignale und/oder
- der Sendung der empfangenen Umgebungsinformationen, insbesondere sensorspezifisch, als Rohdaten oder als im Sensor ausgewertete Echodaten speichern, welche mittels des elektronischen Steuergerätes (2) jeweils wahlweise aktiviert werden können.

2. Sensorbus-System nach Anspruch 1, wobei die Zweidrahtleitung (4) das elektronische Steuergerät (2) und die Sensoren (3) über
- eine Ringstruktur oder
- eine lineare Struktur
informationstechnisch und energetisch verbindet.

3. Sensorbus-System nach einem der vorstehenden Ansprüche, wobei die I/Q-Modulation
- eine PSK, insbesondere QPSK, 8PSK oder 16 PSK, bevorzugt eine DPSK, und/oder
- eine Quadratur-Amplituden-Modulation umfasst und/oder
- eine Grundfrequenz von mindestens 100 kHz verwendet.

4. Sensorbus-System nach einem der vorstehenden Ansprüche weiter umfassend einen Equalizer (16) in einem Empfangspfad des elektronischen Steuergerätes (2) und/oder in einem Sendepfad der Sensoren (3), welcher eingerichtet ist, eine Dämpfung der Zweidrahtleitung zu kompensieren.

5. Sensorbus-System nach einem der vorstehenden Ansprüche, wobei das elektronische Steuergerät (2) eingerichtet ist, über die Zweidrahtleitung (4) ein amplitudenmoduliertes Trägersignal an die Sensoren (3) zu senden und die Sensoren (3) eingerichtet sind, die empfangenen Umgebungsinformationen dem Trägersignal synchron I/Q-moduliert über die verdrillte Zweidrahtleitung (4) an das elektronische Steuergerät (2) zu senden.

6. Sensorbus-System nach einem der vorstehenden Ansprüche, wobei die Sensoren (3) eingerichtet sind, die empfangenen Umgebungsinformationen
- in einem Zeitmultiplex-Verfahren und/oder
- in einem Frequenzmultiplex-Verfahren
I/Q-moduliert über die verdrillte Zweidrahtleitung (4) an das elektronische Steuergerät (2) zu senden.

7. Sensorbus-System nach einem der vorstehenden Ansprüche, wobei das Steuergerät (2) eingerichtet ist, den Sensoren (3) -insbesondere dynamisch- ein jeweiliges Zeitfenster zuzuweisen, innerhalb dessen die Sensoren (3) die empfangenen Umgebungsinformationen über die verdrillte Zweidrahtleitung (4) senden dürfen.

8. Verfahren zur Datenübertragung in einem Sensorbus-System (1), in welchem mehrere Sensoren (3) und ein elektronisches Steuergerät (2) informationstechnisch durch eine verdrillte Zweidrahtleitung (4) linear miteinander verbunden sind, umfassend die Schritte:
- Versorgen (100) der Sensoren (3) mit elektrischer Energie durch das elektronische Steuergerät (2) über die verdrillte Zweidrahtleitung (4),
- Empfangen (200) von Umgebungsinformationen durch die Sensoren (3),
- I/Q-Modulieren (300) der Umgebungsinformationen in den Sensoren (3) und
- Senden (400) der I/Q-modulierten Umgebungsinformationen über die verdrillte Zweidrahtleitung (4) von den Sensoren (3) an das elektronische Steuergerät (2), wobei während eines Empfangs von Signalen die empfangenen Umgebungsinformationen I/Q-moduliert über die verdrillte Zweidrahtleitung (4) an das elektronische Steuergerät (2) gesendet werden,
- wobei die Sensoren (3) Datensätze repräsentierend vorkonfigurierte Verhaltensweisen bezüglich
- der Aussendung von Messsignalen in eine Umgebung und/oder
- des Empfangs von Echos der Messsignale und/oder
- der Sendung der empfangenen Umgebungsinformationen, insbesondere sensorspezifisch, als Rohdaten oder als im Sensor ausgewertete Echodaten speichern, welche mittels des elektronischen Steuergerätes (2) jeweils wahlweise aktiviert werden können.
